# DEMANDE DE BREVET EUROPEEN

(11) **EP 4 659 572 A1**
(43) Date de publication de la demande: **10.12.2025**
(21) Numéro de dépôt: 25180613.9
(22) Date de dépôt: 03.06.2025
(51) Int. Cl.: A01K 1/01

(54) **SYSTÈME DE COLLECTE, POUR LA COLLECTE DES LIQUIDES S'ÉCOULANT SUR LE SOL D'UNE ENCEINTE POUR L'ÉLEVAGE D'ANIMAUX, PAR EXEMPLE DE BOVINS**

(30) Priorité: 06.06.2024 FR 2405954
(71) Demandeur: Group Elastoteck, 44850 Mouzeil (FR)
(72) Inventeur: BIORET, Jean-Vincent, 44390 PETIT MARS (FR)
(74) Mandataire: Jacobacci Coralis Harle

(57) **Abrégé**

La présente invention concerne un système de collecte (10), pour la collecte des liquides s'écoulant sur le sol (S) d'une enceinte pour l'élevage d'animaux, par exemple de bovins.

Ce système de collecte (10) comprend :
(i) un revêtement de sol (20) consistant en un tapis, comportant des rainures (23) dont une paroi de fond (24) comporte des orifices traversants (245), et
(ii) des moyens d'aspiration (30), destinés à être raccordés auxdits orifices traversants (245) et adaptés à générer une aspiration des liquides au travers desdits orifices traversants (245).

## Description

### Domaine technique de l'invention

La présente invention concerne le domaine technique des systèmes de collecte, pour la collecte des liquides s'écoulant sur le sol d'une enceinte pour l'élevage d'animaux, par exemple de bovins.

### Etat de la technique

Le confort des animaux constitue un paramètre déterminant dans le rendement d'un élevage, qui influence notamment la santé, la prise alimentaire, la fertilité et la longévité des animaux.

En étable, ce confort implique notamment une évacuation rapide et efficace des déjections générées par les animaux.

Cette gestion des déjections doit en effet permettre de réduire les émanations de gaz et la prolifération de bactéries dans l'enceinte d'élevage, et par conséquent d'améliorer les conditions d'ambiance et les performances sanitaires.

Ces déjections sont en plus susceptibles de rendre le sol glissant, avec les risques de chute et de blessure qui en découlent.

Plusieurs systèmes d'évacuation des déjections coexistent à ce jour : les systèmes d'évacuation mécanique et les systèmes de caillebotis, notamment.

Dans le cadre d'une solution par « évacuation mécanique », les déjections présentes sur le sol sont raclées une à plusieurs fois par jour par un dispositif de raclage dénommé rabot (manœuvré par un tracteur ou par des moyens automatiques), pour être amenées jusqu'à une fosse de collecte située hors du bâtiment d'élevage.

Une autre solution consiste alors à équiper les zones de circulation des animaux (aires d'attente, couloirs d'exercice, etc.) avec un sol caillebotis (généralement constitué de plaques de béton préfabriquées).

Toutefois, dans ces systèmes, la séparation des urines et des fèces n'est pas optimale, voire inexistante, constituant ainsi une source importante d'ammoniac.

De plus, l'installation d'un tel système d'évacuation implique des travaux de gros œuvre importants, qui sont difficiles à envisager dans une enceinte d'élevage existante.

Il existe par conséquent un besoin de solutions techniques permettant une réduction de l'humidité des sols dans les enceintes d'élevage, avantageusement cela sans nécessiter des travaux de gros œuvre importants, de sorte à améliorer les conditions d'adhérence et les conditions sanitaires des animaux.

Il existe également un intérêt pour des solutions simples qui permettent une certaine séparation des urines et des fèces, de manière à limiter la production d'ammoniac dans les enceintes d'élevage.

### Présentation de l'invention

Afin de remédier à l'inconvénient précité de l'état de la technique, la présente invention propose un système de collecte, pour la collecte des liquides s'écoulant sur le sol d'une enceinte pour l'élevage d'animaux, par exemple de bovins.

Le système de collecte comprend :
(i) un revêtement de sol consistant en un tapis, réalisé dans au moins un matériau apte à subir une déformation élastique, dont la longueur est par exemple comprise entre 5 m et 200 m,
   lequel revêtement de sol comporte :
      - une embase dont une face inférieure est destinée à reposer sur ledit sol,
      - des portions d'appui, réparties sur ladite embase, sur lesquelles les animaux sont destinés à prendre appui, et
      - des rainures, séparant lesdites portions d'appui et destinées à recevoir les liquides s'écoulant sur ledit revêtement de sol,
   lesquelles rainures sont chacune délimitées par une paroi de fond, correspondant à une bande de ladite embase ménagée entre deux portions d'appui,
   laquelle paroi de fond est délimitée par une face supérieure, formant le fond de ladite rainure, et par une face inférieure, formant une partie de ladite face inférieure de l'embase,
   laquelle paroi de fond comporte des orifices traversants qui débouchent au travers de ladite face supérieure et de ladite face inférieure de ladite paroi de fond, et
(ii) des moyens d'aspiration, avantageusement des moyens de ventilation, destinés à être raccordés auxdits orifices traversants et adaptés à générer une aspiration des liquides au travers desdits orifices traversants, dans le sens face supérieure vers la face inférieure.

En pratique, lorsque les moyens d'aspiration sont en fonctionnement, ils génèrent une force de succion qui tire les liquides à travers les orifices traversants, situés dans la paroi de fond.

Ces orifices traversants, convenablement répartis, permettent un flux optimal de liquides, garantissant ainsi que les liquides indésirables sont évacués rapidement et efficacement.

La conception des moyens d'aspiration tient avantageusement compte des caractéristiques spécifiques des liquides à aspirer, telles que la viscosité et la densité, afin de maintenir une performance optimale du système de collecte.

D'autres caractéristiques non limitatives et avantageuses du produit/procédé conforme à l'invention, prises individuellement ou selon toutes les combinaisons techniquement possibles, sont les suivantes :
- les rainures sont rectilignes et s'étendent parallèlement les unes par rapport aux autres, délimitant entre elles une pluralité de portions d'appui qui ont chacune la forme d'une bande rectiligne ;
- les rainures ont chacune une largeur allant de 15 à 40 mm, et une profondeur allant de 5 à 25 mm, et les portions d'appui ont une largeur allant de 50 à 500 mm ;
- ladite embase intègre une couche de renfort ;
- la paroi de fond présente une épaisseur allant de 1 à 5 mm, par exemple de 1 à 3mm ;
- la face supérieure de la paroi de fond est concave, par exemple de section courbe ou polyédrique ; les orifices sont ménagés au milieu de la largeur de ladite face supérieure ;
- la face inférieure de la paroi de fond est concave, par exemple de section courbe ou polyédrique ;
- les orifices traversants ont un diamètre allant de 4 mm à 15 mm, de préférence 5 à 10 mm.

La présente invention concerne encore une enceinte d'élevage équipée d'un système de collecte selon l'invention.

L'enceinte d'élevage comporte un couloir de circulation comportant un axe longitudinal et dont le sol est recouvert par ledit revêtement de sol ; et les rainures dudit revêtement de sol sont agencées parallèlement, ou au moins approximativement parallèlement, par rapport audit axe longitudinal.

De préférence, le sol comporte des conduits pour l'évacuation des liquides, par exemple choisi parmi :
- un sol caillebotis comportant des conduits en forme de fentes, ou
- un sol rainuré comportant des conduits en forme de rainures longitudinales, dont la cote en largeur et en profondeur est par exemple de 1 à 5 cm,
   lesquels orifices traversants sont ménagés en communication fluidique avec lesdits conduits,
   lesquels conduits sont raccordés aux moyens d'aspiration, de sorte à générer l'aspiration des liquides au travers desdits orifices traversants, via lesdits conduits.

La présente invention concerne également un procédé d'installation d'un système de collecte selon l'invention.

Ce procédé comprend les étapes suivantes :
- la pose dudit revêtement de sol sur le sol et l'installation desdits moyens d'aspiration, puis
- le perçage desdits orifices traversants en regard des conduits du sol, par exemple au moyen d'un emporte-pièce.

De préférence, les moyens d'aspiration génèrent une puissance d'aspiration. Et la surface totale des orifices, définie avantageusement par leurs diamètres et leurs nombres, est adaptée en fonction de ladite puissance d'aspiration.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue schématique et en coupe du système de collecte selon l'invention ;
[Fig. 2] est une vue partielle, et en perspective, de la face supérieure du revêtement de sol ;
[Fig. 3] est une vue partielle et en coupe du revêtement de sol, illustrant en particulier la paroi de fond au niveau d'une rainure ;
[Fig. 4] est une vue partielle et en coupe du revêtement de sol, illustrant en particulier la paroi de fond au niveau d'une rainure, selon une variante de réalisation ;
[Fig. 5] est une vue de dessus d'un sol caillebotis ;
[Fig. 6] est une vue de dessus du revêtement de sol rapporté sur ce sol caillebotis (seuls les orifices sont représentés dans un souci de simplification) ;
[Fig. 7] est une vue schématique et en coupe d'un revêtement de sol rapporté sur un sol rainuré.

Il est à noter que, sur ces figures, les éléments structurels et/ou fonctionnels communs aux différentes variantes peuvent présenter les mêmes références.

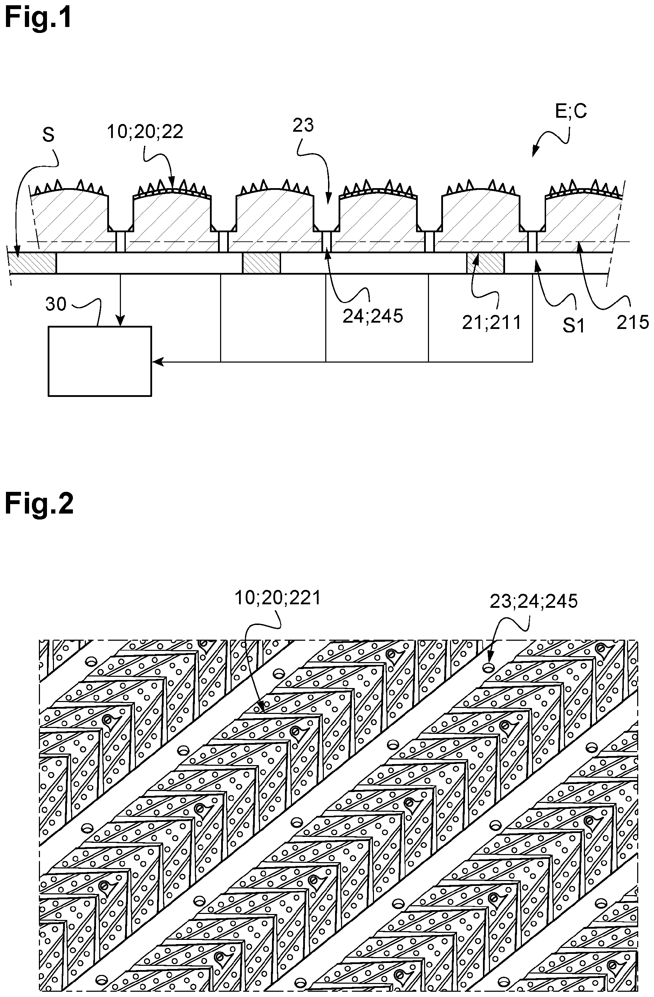

Tel que représenté schématiquement sur la figure 1, la présente invention concerne un système de collecte 10, pour la collecte des liquides s'écoulant sur le sol S d'une enceinte E pour l'élevage d'animaux, par exemple de bovins.

De manière générale, le système de collecte 10 comprend :
(i) un revêtement de sol 20 consistant en un tapis, destinée à reposer sur le sol S,
   lequel revêtement de sol 20 comporte des orifices traversants décrits par la suite, et
(ii) des moyens d'aspiration 30, avantageusement des moyens de ventilation, destinés à être raccordés aux orifices traversants et adaptés à générer une aspiration des liquides au travers de ces orifices traversants.

### Enceinte d'élevage

Par « animaux », on entend notamment les bovins (en particulier les vaches laitières ou les bovins à viande), les porcins, ou encore tout autre animal d'élevage (ovin, volaille, lapin, cheval, etc.).

Une telle enceinte d'élevage (non représentée) consiste en un bâtiment délimité par un bâti, adapté à l'élevage souhaité (par exemple une étable dans le cas de bovins).

Une partie au moins du sol S de cette enceinte d'élevage est recouverte par le revêtement de sol 20 selon l'invention.

En particulier, le revêtement de sol 20 est avantageusement implanté au niveau des couloirs de circulation C qui sont empruntés par les animaux cheminant entre les différents espaces fonctionnels de l'enceinte d'élevage (par exemple logettes, salles de traite, etc.).

Le couloir de circulation C comporte un axe longitudinal (non représenté), dont le sol S est recouvert par ce revêtement de sol 20.

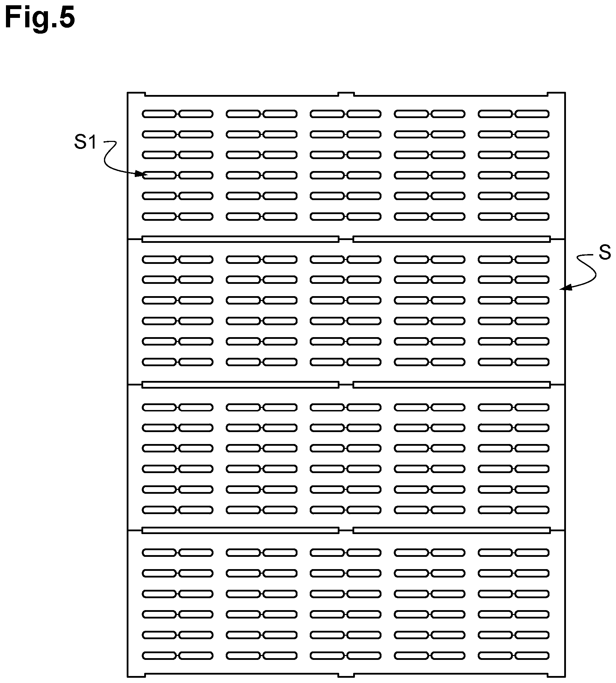

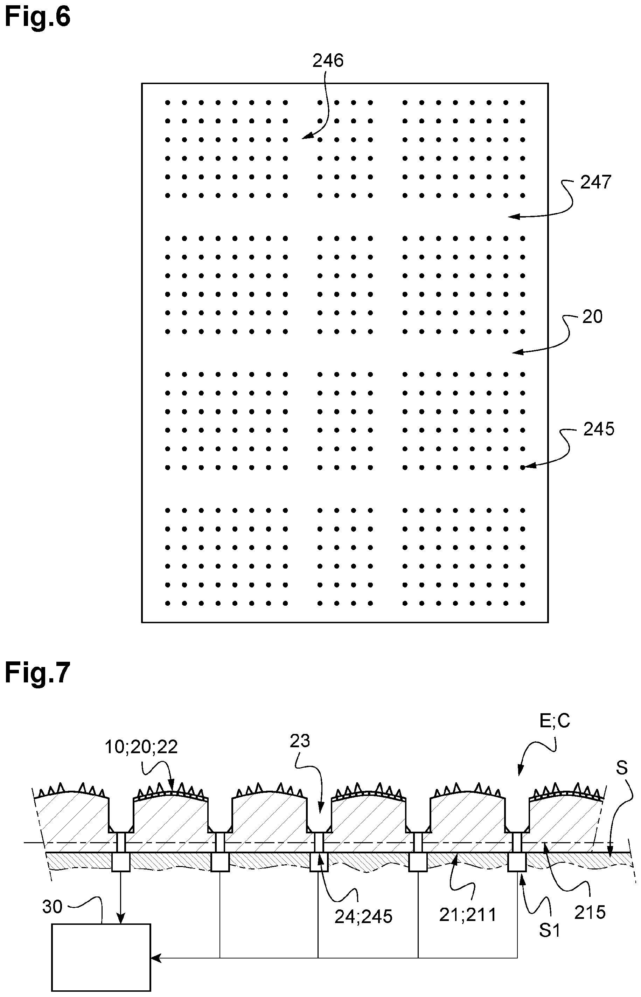

De manière générale, le sol S comporte des conduits S1 pour l'évacuation des liquides, par exemple choisi parmi :
- un sol S caillebotis comportant des conduits S1 en forme de fentes (figures 1 et 5), ou
- un sol S rainuré comportant des conduits S1 en forme de rigoles longitudinales (figure 7).

Par « sol caillebotis », on entend en particulier un sol comportant des fentes S1, traversantes, dont les dimensions présentent un compromis entre un écoulement des liquides et la stabilité des animaux.

Un tel sol caillebotis S forme alors un plancher ajouré, recouvrant une fosse (non représentée).

De manière générale, les fentes S1 sont rectilignes, de préférence avec un contour rectangulaire ou oblong. Chaque fente S1 comporte avantageusement un axe longitudinal.

Chaque fente S1 est ainsi avantageusement délimitée par :
- deux grands côtés, définissant sa cote en largeur et avantageusement son axe longitudinal, et
- deux petits côtés, définissant sa cote en longueur.

Les deux grands côtés s'étendent avantageusement parallèlement l'un par rapport à l'autre.

Les deux grands côtés s'étendent avantageusement perpendiculairement à l'axe longitudinale de ce couloir de circulation.

Les fentes S1 comportent avantageusement les cotes suivantes :
- une largeur de 25 à 45 mm et
- une longueur de 2 000 à 5 000 mm.

De préférence, les fentes S1 sont régulièrement réparties sur le sol caillebotis S, formant des lignes discontinues parallèles.

Pour un sol rainuré, la cote en largeur et en profondeur des rigoles longitudinales S1 est par exemple de 1 à 5 cm.

Un sol rainuré consiste par exemple en une chape (ou une dalle) en béton, éventuellement armée avec un treillis métallique, ou en bitume.

Les rigoles longitudinales S1 sont avantageusement ménagées par rainurage.

Ces rigoles longitudinales S1 s'étendent avantageusement parallèlement à l'axe longitudinale de ce couloir de circulation.

De manière générale, de préférence, ces conduits S1 sont raccordés aux moyens d'aspiration 30, de sorte à générer l'aspiration des liquides au travers des orifices traversants 245, via ces conduits S1.

En d'autres termes, dans le cadre de la présente invention, les conduits S1 sont avantageusement reliés aux moyens d'aspiration 30, afin de créer une aspiration des liquides à travers des orifices traversants 245.

### Revêtement de sol

Le revêtement de sol 20 est apte à collecter les liquides s'écoulant sur le sol et à les évacuer, de sorte à offrir une surface d'appui relativement sèche (ou au moins ne présentant pas une humidité excessive) pour les pieds des animaux, et donc plus saine.

Par « liquides », on entend en particulier les déjections liquides produites par les animaux de l'élevage, en particulier leur urine.

De manière générale, de préférence, le revêtement de sol 20 présente une longueur continue allant de 5 m à 200 mm.

De manière générale, le revêtement de sol 20 comprend :
- une embase 21 dont une face inférieure 211 est destinée à reposer sur le sol S,
- des portions d'appui 22, réparties sur l'embase 21, sur lesquelles les animaux sont destinés à prendre appui, et
- des rainures 23, séparant les portions d'appui 22 et destinées à recevoir les liquides s'écoulant sur le revêtement de sol 20.

Les portions d'appui 22 ont de préférence une surface plane horizontale ou une surface courbe convexe.

Pour une adhérence optimale, ces portions d'appui 22 sont avantageusement munies de reliefs antidérapants.

Ces portions d'appui 22 peuvent comporter des sillons transversaux 221, débouchant dans les rainures 23, pour participer à l'écoulement des liquides (figure 2).

De manière générale, les rainures 23 sont avantageusement sus-jacentes des conduits S1 ménagées dans le sol S.

Ces rainures 23 peuvent :
- croiser transversalement les conduits S1, en particulier pour le sol caillebotis, ou
- recouvrir longitudinalement les conduits S1, en particulier pour un sol rainuré.

Les rainures 23 sont chacune délimitées par une paroi de fond 24, correspondant à une bande de l'embase 21 ménagée entre deux portions d'appui 22.

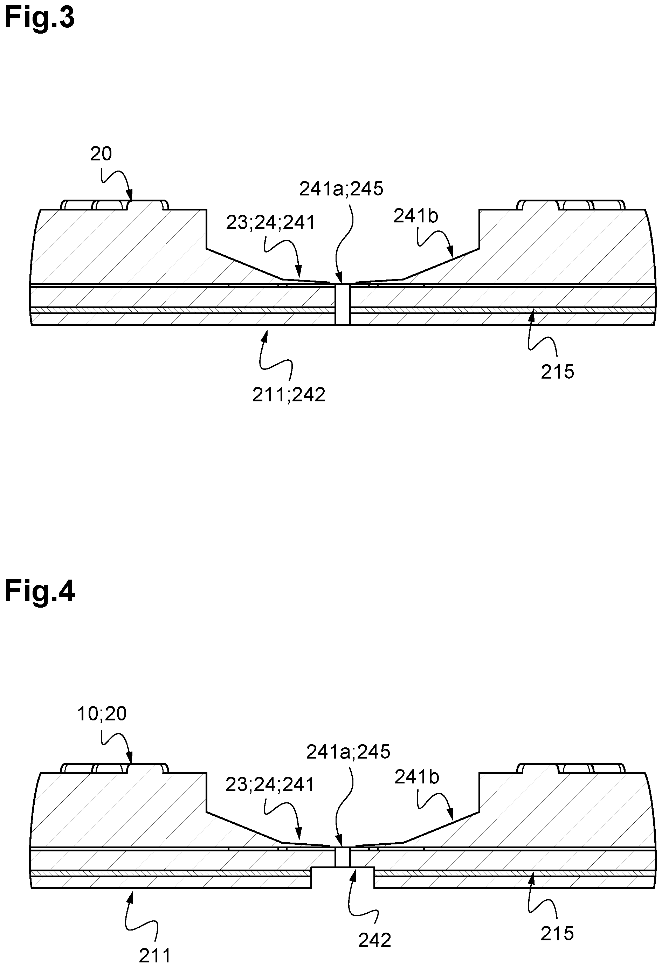

Tel que représenté en particulier sur les figures 3 et 4, la paroi de fond 24 est délimitée par deux faces :
- une face supérieure 241, formant le fond de la rainure 23, et
- une face inférieure 242, formant une partie de ladite face inférieure 211 de l'embase 21.

Et cette paroi de fond 24 comporte des orifices traversants 245 qui débouchent au travers de la face supérieure 241 et de la face inférieure 242 de cette paroi de fond 24.

Plus précisément, la paroi de fond 24 comporte :
- une cote en épaisseur, définie par la face supérieure 241 et par la face inférieure 242,
- une cote en profondeur, correspondant à la distance entre la face supérieure 241 et la face supérieure des portions d'appui 22, et
- une cote en largeur, définie entre deux portions d'appui 22.

La paroi de fond 24 présente avantageusement une épaisseur (avantageusement une épaisseur minimale au niveau des orifices traversants) allant de 1 à 5 mm, par exemple de 1 à 3mm.

Cette cote en épaisseur, réduite, est en particulier intéressante pour limiter le risque de colmatage par les déjections solides.

Pour limiter cette épaisseur, la paroi de fond 24 comporte de préférence une face supérieure 241 et/ou une face inférieure 242 qui présente une section concave.

Selon une forme de réalisation, la face supérieure 241 de la paroi de fond 24 est concave (s'ouvrant vers le haut), par exemple de section courbe (par exemple en arc de cercle) ou polyédrique.

Par « polyédrique », on entend par exemple une face supérieure comportant un pan central 241a, planaire ou courbe concave, ménagé entre deux pans inclinés 241b (figure 3).

Les orifices traversants 245 sont ménagés de préférence au milieu de la largeur de la face supérieure 241.

De manière générale (notamment dans un sol caillebotis ou un sol rainuré), les orifices traversants 245 sont avantageusement régulièrement répartis.

Selon un mode de réalisation, pour les différents sols, des bandes 246, 247 dépourvues de tels orifices traversants 245 participent avantageusement à la résistance structurelle du revêtement de sol 20 (figure 6).

En ce sens, par exemple, des bandes longitudinales 246 (le long des rainures 23) et/ou des bandes transversales 247 (perpendiculaires aux rainures 23) sont avantageusement dépourvues d'orifices traversants 245 (figure 6).

Par ailleurs, comme illustré sur la figure 4, la face inférieure 242 de la paroi de fond 24 est avantageusement concave (s'ouvrant vers le bas), par exemple de section courbe (par exemple en arc de cercle) ou polyédrique.

Par « polyédrique », on entend par exemple une face inférieure comportant un pan central ménagé entre deux pans verticaux (figure 4).

Toujours selon l'invention, la paroi de fond 24 comporte les orifices traversants 245, adaptés à l'écoulement des liquides, qui sont avantageusement répartis sur sa longueur (figure 2).

Par exemple, les orifices traversants 245 ont un diamètre allant de 4 mm à 15 mm, de préférence 5 à 10 mm.

De manière générale, les orifices traversants 245 sont ménagés en communication fluidique avec les conduits S1.

De préférence, dans le cas d'un sol caillebotis, au moins un orifice traversant 245 (de préférence deux orifices traversants 245) est ménagé en communication fluidique avec un conduit S1.

De préférence, les rainures 23 sont rectilignes et s'étendent parallèlement les unes par rapport aux autres, délimitant entre elles une pluralité de portions d'appui 22 qui ont chacune la forme d'une bande rectiligne.

Chaque rainure 23 comporte avantageusement un axe longitudinal ; les axes longitudinaux des différentes rainures 23 s'étendent parallèlement les uns aux autres.

De préférence, les rainures 23 sont réparties sur la largeur du revêtement de sol 20 ; et ces rainures 23 s'étendent sur toute la longueur du revêtement de sol 20.

De préférence, les rainures 23 ont chacune :
- une largeur allant de 15 à 40 mm, et
- une profondeur allant de 5 à 25 mm.

Les portions d'appui 22 ont une largeur allant de 50 à 500 mm.

De préférence, en présence d'un couloir de circulation C comportant un axe longitudinal, les rainures 23 du revêtement de sol S 20 sont agencées parallèlement, ou au moins approximativement parallèlement, par rapport audit axe longitudinal.

Le revêtement de sol 20 est avantageusement réalisé dans au moins un matériau apte à subir une déformation élastique.

Les portions d'appui 22 sont avantageusement adaptées à subir une déformation en enfoncement, cela d'au moins 1 mm, et de préférence comprise entre 1 et 5 mm, lors de l'appui du pied de l'animal ou d'une personne.

Par « enfoncement », on entend en particulier une diminution de l'épaisseur entre la portion d'appui 22 la face inférieure 211 de l'embase 22, par rapprochement des surfaces respectives.

Pour cela, le revêtement de sol 20 est avantageusement réalisé dans au moins un matériau apte à subir une déformation élastique choisi parmi :
- les matériaux élastomères, à savoir par exemple le caoutchouc naturel, le caoutchouc « naturel synthétique » (ou poly-isoprène synthétique), le polybutadiène ou le styrène - butadiène, ou
- les matériaux plastiques ou élastomères thermoplastiques (TPE), à savoir par exemple le PVB (Polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Ce revêtement de sol 20 peut être réalisé :
- mono-matériau, ou
- multi-matériaux, par exemple un premier matériau formant l'embase et un second matériau formant les portions d'appui.

Selon un mode de réalisation préféré, l'embase 21 intègre une couche de renfort 215.

La couche de renfort 215 est choisie avantageusement parmi les fibres textiles, de métal ou de tout autre produit apportant la stabilité et/ou la résistance à l'élongation.

Cette couche de renfort 215 consiste par exemple en une armature textile servant de renfort, réalisée avantageusement en matériau choisi parmi le nylon, le coton, le polyester, le polyamide ou tout autre textile de renfort.

Un tel revêtement de sol 20 peut être fabriqué par assemblage d'un ensemble de pièces superposées, pour former un ensemble du type monobloc, par exemple :
- par vulcanisation d'un ensemble de pièces en matériau élastomère,
- par collage,
- par soudage.

### Moyens d'aspiration

Les moyens d'aspiration 30 sont adaptés à assurer une puissance d'aspiration apte à exercer une aspiration des liquides au travers des orifices traversants 245.

Plus généralement, les moyens d'aspiration 30, qui peuvent inclure des dispositifs tels que des ventilateurs à haute efficacité, sont adaptés à générer une puissance d'aspiration suffisante.

Cette puissance d'aspiration est calibrée de manière à créer une différence de pression adéquate pour aspirer les liquides de manière efficace.

Lorsque les moyens d'aspiration 30 sont en fonctionnement, ils génèrent une force de succion qui tire les liquides à travers les orifices traversants 245, situés dans la paroi de fond 24.

Ces orifices traversants 245, convenablement répartis, permettent un flux optimal de liquides, garantissant ainsi que les liquides indésirables sont évacués rapidement et efficacement.

La conception des moyens d'aspiration tient compte des caractéristiques spécifiques des liquides à aspirer, telles que la viscosité et la densité, afin de maintenir une performance optimale du système de collecte.

Les moyens d'aspiration 30 comportent avantageusement des moyens de capture de l'ammoniaque et utilisent une solution acide pour sa conversion en engrais.

Dans le cas d'un sol caillebotis, les moyens d'aspiration 30 sont avantageusement raccordés à la fosse en vue de l'aspiration des gaz.

### Mise en œuvre

En pratique, le procédé d'installation du système de collecte 10 selon l'invention comprend les étapes suivantes :
- la pose du revêtement de sol 20 sur le sol S et l'installation des moyens d'aspiration 30,
- le perçage des orifices traversants 245 en regard des conduits S1 du sol S, par exemple au moyen d'un emporte-pièce.

En pratique, la pose du revêtement de sol 20 revient à recouvrir les conduits S1 du sol S.

Un tel revêtement de sol 20, avant sa pose, est avantageusement stocké sous forme de plaques, et de préférence encore sous forme de rouleaux.

Cette dernière forme de réalisation en rouleaux a l'intérêt de permettre une pose simple et rapide du revêtement de sol 20 dans l'enceinte d'élevage par déroulement ; elle permet aussi d'assurer une continuité optimale des rainures pour la récupération efficace des liquides aux extrémités de ces rainures.

À la suite de cette pose, les orifices traversants 245 sont ménagés (notamment en nombre et en diamètre) de sorte à obtenir une surface totale adaptée notamment aux moyens d'aspiration 30.

En particulier, les orifices traversants 245 sont ménagés :
- en regard des conduits S1 en forme de fentes, pour le sol caillebotis (figures 1 et 5), ou
- en regard des conduits S1 en forme de rigoles longitudinales, pour le sol rainuré (figure 7).

De manière générale, le revêtement de sol 20 permet alors un écoulement des liquides dans les rainures, évitant ainsi l'accumulation de ces liquides sur les portions d'appui qui restent ainsi relativement sèches.

Les matières solides, notamment les fèces, restent principalement sur les portions d'appui, de sorte à éviter leur mélange et à limiter la production d'ammoniac au sein de l'enceinte d'élevage.

Ces matières solides sont avantageusement évacuées par raclage des portions d'appui, au moyen d'un système de raclage avantageusement choisi parmi les systèmes habituels.

Et, en fonctionnement, ces conduits S1 sont raccordés aux moyens d'aspiration 30, de sorte à générer l'aspiration des liquides au travers les orifices traversants 245, via les conduits S1.

Les moyens d'aspiration 30 vont avantageusement créer un flux d'aspiration au niveau des conduits S1. Lorsque ces moyens d'aspiration sont en fonctionnement, ils génèrent une pression négative qui induit un flux continu d'air ou de liquide à travers les conduits S1. Ce flux d'aspiration se prolonge jusqu'au niveau des orifices traversants 245, situés dans la paroi de fond 24. Les orifices traversants 245 sont en communication fluidique (avantageusement directe) avec les conduits S1. Cette configuration permet une transmission fluide et sans interruption du flux d'aspiration depuis les conduits S1 jusqu'à traverser les orifices 245. En conséquence, les liquides indésirables présents à la surface du revêtement de sol 20 sont efficacement attirés et évacués à travers les orifices, grâce à la puissance d'aspiration générée. Cette disposition assure une collecte rapide et efficace des liquides, maintenant ainsi le système en état de fonctionnement optimal.

En outre, le sens du flux de liquide au travers des orifices traversants 245 est déterminé par la différence de pression créée par les moyens d'aspiration 30. Le liquide s'écoule depuis la face supérieure 241 de la paroi de fond 24, où il s'accumule initialement, vers la face inférieure de cette même paroi de fond 24, en réponse à la pression négative exercée. Ce mouvement du liquide est dirigé, permettant une évacuation efficace. Cette direction contrôlée du flux de liquide optimise le processus de collecte et évite toute stagnation, assurant ainsi que les liquides sont retirés de la surface du revêtement de sol 20.

De manière générale, les moyens d'aspiration 30 génèrent une puissance d'aspiration.

Et pour maximiser l'efficacité du système, la surface totale des orifices traversants 245 est adaptée en fonction de la puissance d'aspiration générée par les moyens d'aspiration 30.

La surface totale des orifices traversants 245 est définie avantageusement par leurs diamètres et leurs nombres.

La surface totale des orifices traversants 245, par lesquels les liquides sont aspirés, est avantageusement calculée en combinant les diamètres et le nombre des orifices traversants 245. En d'autres termes, chaque orifice traversant 245 contribue à la surface totale, et une optimisation de leur taille et de leur nombre est intéressante pour assurer une aspiration optimale.

Une corrélation entre la surface totale des orifices et la puissance d'aspiration est avantageux.

Si la surface totale des orifices est trop faible, l'aspiration pourrait être insuffisante, entraînant une évacuation inefficace des liquides. Inversement, si la surface totale est trop élevée, cela pourrait diminuer la pression d'aspiration, compromettant également l'efficacité du système.

Ainsi, une conception équilibrée est réalisée en déterminant la surface totale des orifices traversants 245 en fonction de la puissance d'aspiration disponible, assurant que le système fonctionne de manière optimale.

Cette optimisation du couple surface totale des orifices traversants 245 / puissance d'aspiration est mise en œuvre par l'homme du métier.

Cette approche permet de maintenir une aspiration continue et efficace des liquides à travers les orifices traversants 245, garantissant ainsi un fonctionnement fiable et performant du système de collecte.

Bien entendu, diverses autres modifications peuvent être apportées à l'invention dans le cadre des revendications annexées.

## Revendications

1. Système de collecte (10), pour la collecte des liquides s'écoulant sur le sol (S) d'une enceinte pour l'élevage d'animaux, par exemple de bovins,
lequel système de collecte (10) comprend :
(i) un revêtement de sol (20) consistant en un tapis, réalisé dans au moins un matériau apte à subir une déformation élastique,
lequel revêtement de sol (20) comporte :
- une embase (21) dont une face inférieure (211) est destinée à reposer sur ledit sol (S),
- des portions d'appui (22), réparties sur ladite embase (21), sur lesquelles les animaux sont destinés à prendre appui, et
- des rainures (23), séparant lesdites portions d'appui (22) et destinées à recevoir les liquides s'écoulant sur ledit revêtement de sol (20),
lesquelles rainures (23) sont chacune délimitées par une paroi de fond (24), correspondant à une bande de ladite embase (21) ménagée entre deux portions d'appui (22),
laquelle paroi de fond (24) est délimitée par une face supérieure (241), formant le fond de ladite rainure (23), et par une face inférieure (242), formant une partie de ladite face inférieure (211) de l'embase (21),
laquelle paroi de fond (24) comporte des orifices traversants (245) qui débouchent au travers de ladite face supérieure (241) et de ladite face inférieure (242) de ladite paroi de fond (24), et
(ii) des moyens d'aspiration (30), avantageusement des moyens de ventilation, destinés à être raccordés auxdits orifices traversants (245) et adaptés à générer une aspiration des liquides au travers desdits orifices traversants (245), dans le sens face supérieure (241) vers la face inférieure (242).

2. Système de collecte (10), selon la revendication 1, **caractérisé en ce que** les rainures (23) sont rectilignes et s'étendent parallèlement les unes par rapport aux autres, délimitant entre elles une pluralité de portions d'appui (22) qui ont chacune la forme d'une bande rectiligne.

3. Système de collecte (10), selon l'une quelconque des revendications 1 ou 2, **caractérisé en ce que** les rainures (23) ont chacune :
- une largeur allant de 15 à 40 mm, et
- une profondeur allant de 5 à 25 mm, et
**en ce que** les portions d'appui (22) ont une largeur allant de 50 à 500 mm.

4. Système de collecte (10), selon l'une quelconque des revendications 1 à 3, **caractérisé en ce que** ladite embase (21) intègre une couche de renfort (215).

5. Système de collecte (10), selon l'une quelconque des revendications 1 à 4, **caractérisé en ce que** la paroi de fond (24) présente une épaisseur allant de 1 à 5 mm, par exemple de 1 à 3mm.

6. Système de collecte (10), selon l'une quelconque des revendications 1 à 5, **caractérisé en ce que** la face supérieure (241) de la paroi de fond (24) est concave, par exemple de section courbe ou polyédrique, et **en ce que** les orifices traversants (245) sont ménagés au milieu de la largeur de ladite face supérieure (241).

7. Système de collecte (10), selon l'une quelconque des revendications 1 à 6, **caractérisé en ce que** la face inférieure (242) de la paroi de fond (24) est concave, par exemple de section courbe ou polyédrique.

8. Système de collecte (10), selon l'une quelconque des revendications 1 à 7, **caractérisé en ce que** les orifices traversants (245) ont un diamètre allant de 4 mm à 15 mm, de préférence 5 à 10 mm.

9. Enceinte d'élevage équipée d'un système de collecte (10) selon l'une quelconque des revendications 1 à 8,
laquelle enceinte d'élevage comporte un couloir de circulation (C) comportant un axe longitudinal et dont le sol (S) est recouvert par ledit revêtement de sol (20),
et en ce que les rainures (23) dudit revêtement de sol (20) sont agencées parallèlement, ou au moins approximativement parallèlement, par rapport audit axe longitudinal.

10. Enceinte selon la revendication 9, **caractérisée en ce que** le sol (S) comporte des conduits (S1) pour l'évacuation des liquides,
lesquels orifices traversants (245) sont ménagés en communication fluidique avec lesdits conduits (S1),
lesquels conduits (S1) sont raccordés aux moyens d'aspiration (30), de sorte à générer l'aspiration des liquides au travers desdits orifices traversants (245), via lesdits conduits (S1).

11. Enceinte selon la revendication 10, **caractérisée en ce que** les conduits (S1) pour l'évacuation des liquides sont choisi parmi :
- un sol (S) caillebotis comportant des conduits (S1) en forme de fentes, ou
- un sol (S) rainuré comportant des conduits (S1) en forme de rainures (23) longitudinales, dont la cote en largeur et en profondeur est par exemple de 1 à 5 cm.

12. Procédé d'installation d'un système de collecte (10) selon l'une quelconque des revendications 1 à 8 dans une enceinte selon l'une quelconque des revendications 10 ou 11, **caractérisé en ce qu'**il comprend les étapes suivantes :
- la pose dudit revêtement de sol (20) sur le sol (S) et l'installation desdits moyens d'aspiration (30), puis
- le perçage desdits orifices traversants (245) dans ledit revêtement de sol (20), en regard des conduits (S1) du sol (S), par exemple au moyen d'un emporte-pièce.

13. Procédé d'installation selon la revendication 12, **caractérisé en ce que** les moyens d'aspiration (30) génèrent une puissance d'aspiration,
et **en ce que** la surface totale des orifices traversants (245), définie avantageusement par leurs diamètres et leurs nombres, est adaptée en fonction de ladite puissance d'aspiration.
